# EUROPEAN PATENT APPLICATION

(11) **EP 3 771 145 A1**
(43) Date of publication of application: **27.01.2021**
(21) Application number: 20187774.3
(22) Date of filing: 24.07.2020
(51) Int. Cl.: H04L 9/32

(54) **METHODS FOR VALIDATION AND ASSIGNMENT OF CODES, AND RELATED SYSTEM**

(30) Priority: 25.07.2019 IT 201900012882
(71) Applicant: Altinier, Corrado, 31010 Godega Di Sant'Urbano (TV) (IT); Ceotto, Franco, 31058 Susegana (TV) (IT)
(72) Inventor: Altinier, Corrado, 31010 Godega Di Sant'Urbano (TV) (IT); Ceotto, Franco, 31058 Susegana (TV) (IT)
(74) Representative: Zamprogno, Bruno

(57) **Abstract**

Method (100) to validate codes implemented through a validation apparatus (3) including an electronic elaboration unit (5), comprising the steps of: receiving (200, 210) a public code (Cod-A) and an encrypted private code (Cod-B) associated to a code support (7); encrypting the private code (Cod-B) through the public code (Cod-A) and an encryption algorithm, thus generating a validation code; comparing (220) the validation code with the public code (Cod-A) to verify if the validation code and the public code (Cod-A) satisfy between them a predetermined control relation; when said predetermined control relation is satisfied, verifying (300) a condition of presence of the validation code in a blockchain; and when the condition of presence of the validation code in the blockchain is satisfied, signalling (340) a validation of the validation code.

## Description

### CROSS-REFERENCE TO RELATED APPLICATIONS

This patent application claims priority from Italian patent application no. 102019000012882 filed on 25/07/2019.

### TECHNICAL FIELD

The present invention relates to a method to validate codes and a method to assign codes, and relative system to validate codes.

### BACKGROUND ART

There is a known need to securely validate radio-frequency identification codes ("Radio-Frequency IDentification codes", hereinafter also called RFID codes). The RFID code is an identifier code, to which information such as an identification number of a product (goods such as food, industrial, scrap products) or of a user (producer, user, person in charge of transporting the product, etc.) and relevant dates and/or details about the product or user (for example, product expiration and production date, user's address of residence or producer's manufacturing location) is uniquely associated.

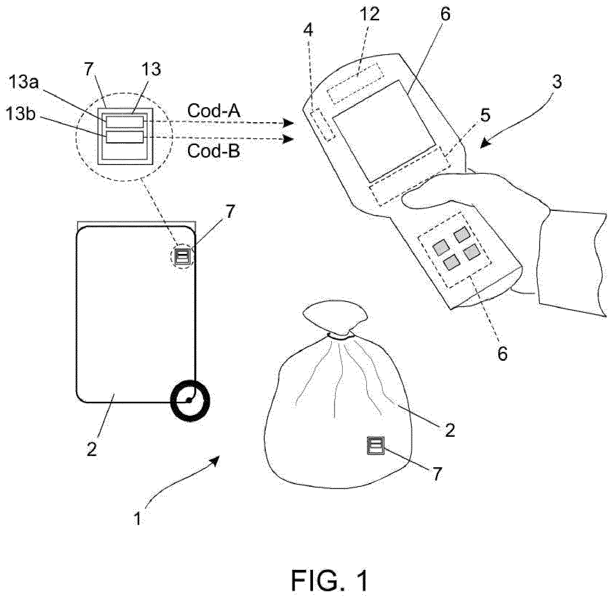

Systems to validate RFID codes are also known. In particular, the patent EP2743213B1, one of the proprietors of which is in common with the present application, discloses a validation system (described in detail below with reference to Figure 1) and a method to validate a waste container through RFID codes. In fact, the need for municipal waste collection bodies/consortia to be able to identify and validate the waste containers delivered by users (owners of the waste containers) with a certain reliability, so as to be able to accurately determine the number of waste deliveries made by each user in a predetermined time interval is known. The waste container hosts a public code Cod-A (of the RFID type) and a private code Cod-B (of the RFID type) encrypted through a predetermined encryption algorithm. This system makes it possible to obtain information concerning the owner of the waste container by encrypting the private code Cod-B starting from the public code Cod-A and from the encryption algorithm. In detail, the encryption algorithm is known only to the producer of the waste container (i.e. the producer of the public code Cod-A and of the private code Cod-B), and possibly to the relative supply chain. The validity and security of said method are based on the secrecy of the encryption algorithm, which is supposed to be known only to the producer and, possibly, to the relative supply chain (for example, through "non-disclosure agreements"). However, if the encryption algorithm becomes known following to an undue publication or information theft, it is possible to produce counterfeit codes Cod-A and Cod-B compliant with the validation system standard. Consequently, reading devices capable of reading and decoding the codes Cod-A and Cod-B might not discriminate the counterfeit Cod-A and Cod-B codes from the original ones, and such codes would be accepted, freely enter the market and be used.

Systems that exploit blockchains to verify the authenticity of the information included in the RFID codes are also known. The systems currently on the market exploit devices that read RFID codes and carry out a process of comparing the information contained in them with data stored in the blockchains, which are generated by the producers of the RFID codes. These data are common to various application fields (in detail, they are information concerning each RFID code available on the market at the time they are consulted). The comparison process is therefore quite long, and is expensive from a computational point of view. Furthermore, the blockchain is not per se capable of guaranteeing the correctness of the code (in relation to the support on which it is read) but only its logical uniqueness in the blockchain itself, thus making it impossible to identify malfunctions in the creation of the physical code support.

### DISCLOSURE OF INVENTION

The object of the present invention is to provide a method to validate codes and a method to assign codes, and relative system to validate codes, which solve the problems of the prior art.

According to the present invention, a method to validate codes, a method to assign codes, and relative system to validate codes are realised, as defined in the attached claims.

### BRIEF DESCRIPTION OF THE DRAWINGS

Further features and advantages of the present invention will become apparent from the detailed description that follows, provided by way of non-limiting example with reference to the accompanying drawings, wherein:
- Figure 1 is a schematic view of a system to validate a waste container during an operational step of validation of a validation code;
- Figure 2 represents a flow diagram of the operations performed by the system of Figure 1 during the operational step of validation of the validation code;
- Figure 3 represents a different flow diagram of the operations performed during an operational step of generation of the validation code;
- Figure 4 represents a different flow diagram of the operations performed by the system of Figure 1 during an operational step of ownership transfer of the validation code; and
- Figure 5 represents a different flow diagram of the operations carried out by the system of Figure 1 during an operational step of transfer of real right of the validation code.

### BEST MODE FOR CARRYING OUT THE INVENTION

With reference to Figure 1, the number 1 indicates as a whole a system to validate waste containers (also referred to as validation system 1), according to an embodiment of the present invention. The validation system 1 comprises a plurality of waste containers 2, each of which is provided with a public code Cod-A and a private code Cod-B encrypted through a predetermined encryption algorithm.

Preferably, the waste containers 2 could comprise bags, and/or drums, and/or glass containers, and/or bins, and/or any other similar type of known container structured so as to be able to contain waste.

The validation system 1 also comprises an apparatus for validating the containers 3, which is structured to be used preferably, but not necessarily, by an operator in charge of the collection of waste and comprises: a container code reading device 4 configured in such a way as to read the public code Cod-A and the private code Cod-B present in the container 2; and an electronic elaboration unit 5, which is configured in such a way as to: receive the public code Cod-A and the private code Cod-B, and encrypt the private code Cod-B on the basis of the public code Cod-A so as to determine the encrypted private code Cod-B.

The electronic elaboration unit 5 is also configured in such a way as to compare the encrypted private code Cod-B with the public code Cod-A so as to verify if the encrypted private code Cod-B and the public code Cod-A satisfy between them a predetermined relation.

Preferably, the private code Cod-B can comprise an alphanumeric string containing a plurality of information data of the waste collection carried out through the container 2. The information data can be indicative, for example, of the following information: public code Cod-A, and/or type of container (glass container, street bin, individual bin, bag), and/or volumetric capacity of the container, and/or type of waste that can be stored in the container (unsorted, dry, wet, paper, plastic), and/or geographical location of the container (municipality, province, region), and/or the waste collection consortium/ company adapted to manage waste collection through the container 2 (company code, consortium municipality, ATO-Optimal Territorial Scope) and/or customer/user data (customer code).

The electronic elaboration unit 5 is also configured in such a way as to signal the condition of non-validation of the container 2 when the encrypted private code Cod-B and the public code Cod-A do not satisfy between them a predetermined relation or, alternatively, a condition of validation/identification of the container 2 when the control relation is satisfied by the same.

The electronic elaboration unit 5 is also configured in such a way as to execute a control algorithm, which could verify whether the string associated with the private code Cod-B contains the public code Cod-A. Preferably, the control relation can be satisfied for example when the control algorithm determines that the string associated with the private code Cod-B contains the public code Cod-A.

It is appropriate to specify that the control algorithm could be configured differently from what is described above and carry out other types of verifications to determine if the private code Cod-B and the public code Cod-A satisfy between them the control relation. For example, the control algorithm could implement: predetermined mathematical operations on the private code Cod-B and on the public code Cod-A to determine numerical control values and perform mathematical operations on the numerical control values so as to calculate a final control value. In this case, the predetermined control relation could be satisfied when the final control value corresponds to a predetermined value, or when the numerical control values are equal between them, or satisfy a given mathematical equation, etc.

Preferably, the signalling of the validation of the container or the signalling of the non-validation of the same can be carried out by the system 1 in an audible and/or visual manner. For this purpose, the apparatus for validating the containers 3 can be provided with user-interface means 6 (operatively coupled to the apparatus for validating the containers 3) comprising devices for reproducing sound/voice messages and/or displays structured in such a way as to signal the validation or the non-validation of the container 2, and/or command/data incoming devices (keyboards, buttons and similar).

According to a preferred embodiment shown in Figure 1, the system 1 can comprise for each container 2 an RFID transponder 7 operatively coupled to the container 2 and configured to contain the public code Cod-A and the private code Cod-B.

The transponder 7 is a device of known type and consequently it will not be further described except to specify that it can be of the active or passive or semiactive type, and comprises an antenna (not illustrated), and a memory 13 having at least a first memory area 13a, containing the public code Cod-A, and a second memory area 13b, containing the private code Cod-B. According to an embodiment of the present invention, both the first memory area 13a and the second memory area 13b are "Read-only" non-rewritable memories. Preferably, the first memory area 13a can correspond to the "fixed" memory area reserved by an authorized producer of the transponder 7 to contain the identifier-producer code which uniquely identifies the transponder 7.

According to an embodiment, the transponder 7 can correspond to an LF transponder, operating at a frequency comprised between about 120 and 150 Khz, and/or an HF transponder operating at a frequency of about 13.56 Mhz, and/or a UHF transponder operating at a frequency comprised between about 868 and 2400 MHz and/or an NFC transponder.

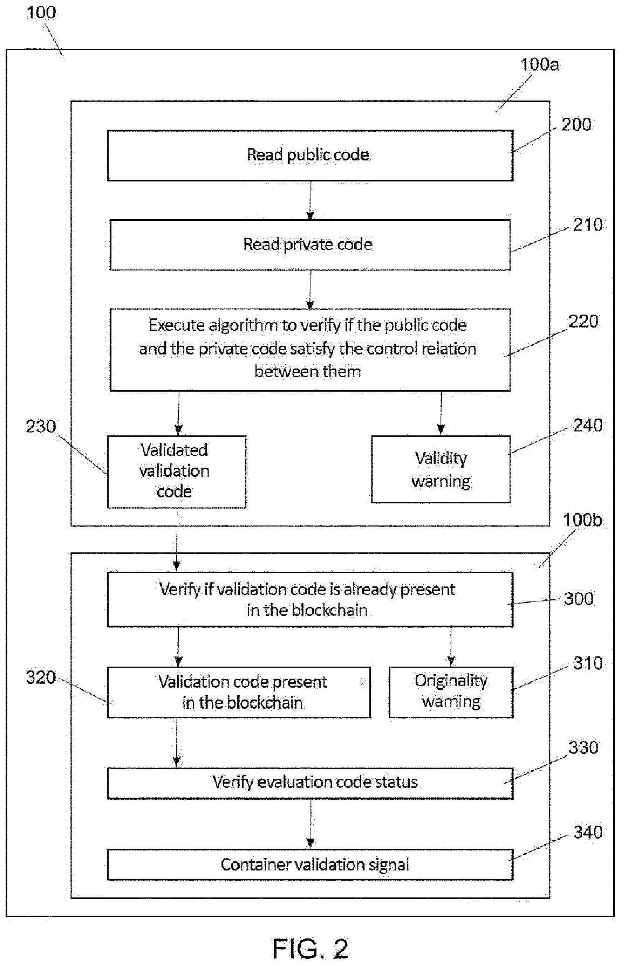

With reference to Figure 2, a verification method 100 is described, based on, and implemented through, the validation system 1 (in particular, through the electronic elaboration unit 5). The verification method 100 is configured to implement a procedure/step of validation of the container 2, and comprises: a validity control 100a, configured to verify the validity of the RFID code in the transponder 7 (thus excluding counterfeits of the transponder 7, such as manual alterations or replacements of the transponder 7 with generic RFID codes); and a consecutive originality control 100b, configured to verify the originality and uniqueness thereof (i.e. that the RFID code has been produced only by one or more authorized producers, and that it has not been cloned or already read previously).

In particular, during the validity control 100a the validation system 1 reads, through the apparatus for validating the containers 3, the public code Cod-A (Block 200) and the private code Cod-B (Block 210) contained in the transponder 7 of the container 2, encrypts the private code Cod-B on the basis of the public code Cod-A by means of one-way (commonly used for example in digital signatures) coding techniques per se known, performs a control algorithm to compare the encrypted private code Cod-B with the public code Cod-A so as to verify if the encrypted private code Cod-B and the public code Cod-A satisfy between them the predetermined control relation (Block 220).

According to an embodiment of the present invention, the predetermined control relation is satisfied when the alphanumeric string that defines the encrypted private code Cod-B contains the public code Cod-A in a given position within the string itself.

The private code Cod-B encrypted by the control algorithm is also referred to in the following as a validation code, and includes information (such as a code, or an alphanumeric string) to which further data can be associated, as described below.

The validation system 1 signals, through the apparatus for validating the containers 3, a condition of non-validation of the validation code when the control relation is not satisfied by the public Cod-A and private Cod-B codes, for example when the string of the encrypted private code Code-B does not contain the public code Code-A (Block 240). Optionally, the condition of non-validation of the validation code is signalled through a first warning message (also referred to as "validity warning"), communicated to the operator of the apparatus for validating the containers 3 through the user-interface means 6 (for example, through a voice message and/or a visual signal).

On the contrary, the validation system 1 signals, through the apparatus for validating the containers 3, a condition of validation of the validation code when the control relation between the private code Cod-B and the public code Cod-A is satisfied. (Block 230). Optionally, the condition of validation of the validation code is signalled through a first notification message (included in block 230 but not shown in Figure 2), communicated to the operator through the user-interface means 6.

Block 230 terminates the validity control 100a, and is followed by the originality control 100b, which is implemented by means of a blockchain. The blockchain is a shared and immutable data structure, where each block composing it is representative of a respective validation code (i.e. it includes said respective validation code and further information, as described below). The blockchain is a structure of a per se known type (for example, Ethereum), and is not described in detail here except to specify that only the authorized producer of the transponder 7 (and optionally the relative supply chain) is authorized to execute new contracts in the blockchain by adding respective new blocks (i.e. storing respective new validation codes in the blockchain). On the contrary, any apparatus for validating the containers 3 is adapted to read the information included in the blocks of the blockchain (i.e. any operator in possession of an apparatus for validating the containers 3 can access the information included in the blocks of the blockchain to view them).

In particular, if the condition of validation of the validation code is verified (Block 230), during the originality control 100b the validation system 1 verifies, through the apparatus for validating the containers 3, a condition of presence of the validation code in the blockchain (Block 300).

The validation system 1 signals, through the apparatus for validating the containers 3, a condition of absence of the validation code from the blockchain when the validation code is not present in the blockchain (Block 310), i.e. when the read validation code has not been previously inserted in the blockchain (and therefore when it has not been produced by the authorized producer). According to an embodiment of the present invention, the condition of absence of the validation code in the blockchain is signalled through a second warning message (also referred to as "originality warning"), communicated to the operator through the interface/user means 6.

On the contrary, the validation system 1 signals, through the apparatus for validating the containers 3, a condition of presence of the validation code in the blockchain when the validation code is present in the blockchain, i.e. when the validation code is original because it is correctly inserted in the blockchain by the authorized producer (Block 320). Optionally, the condition of presence of the validation code in the blockchain is signalled through a second notification message (included in block 320 but not shown in Figure 2), communicated to the operator through the user-interface means 6.

If the validation code is present in the blockchain (Block 320), the validation system 1 then verifies, through the apparatus for validating the containers 3, a status of the validation code (Block 330). The verification of the status of the validation code comprises an acquisition from the blockchain, through the apparatus for validating the containers 3, of information recorded in the blockchain and concerning the validation code. Said information includes, but is not limited to, validation code generation date, relative ownership and details (such as ownership acquisition date, address and/or personal data of an owner of the validation code), any transfer of use and details (such as transfer acquisition date, address and/or personal data of a transferee, and optionally of a transferor). Optionally, the status of the validation code is shown to the operator through a third notification message (included in block 330 but not shown in Figure 2), communicated to the operator through the user-interface means 6.

Following to the verification of the status of the validation code (Block 330), the validation system 1 generates, through the apparatus for validating the containers 3, a validation signal of the container 2 (Block 340), signalled through a fourth notification message to the operator via the user-interface means 6.

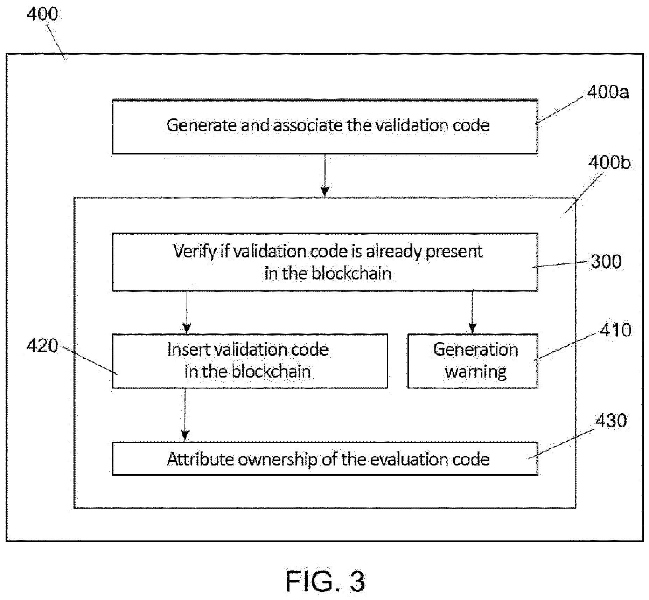

With reference to Figures 3-5, further methods based on the validation system 1 and/or on the validation code and implemented through the electronic elaboration unit 5 are also described. The blocks common to the verification method 100, and therefore already described previously, are not further discussed below and are indicated with the same respective reference numbers of Figure 2.

In particular, Figure 3 describes a generation method 400 for generating the validation code through a writing apparatus (not shown and per se known, being described for example in patent EP2743213B1) used by a writing operator. According to an embodiment of the present invention, the writing apparatus is the apparatus for validating the containers 3, further including an RFID writing unit configured to store the validation code in the transponder 7 (i.e. configured to associate the validation code to the transponder 7).

The generation method 400 is carried out through the writing apparatus (in particular, through the electronic elaboration unit 5 included in the writing apparatus) and includes creating the validation code (for example, creating the public code Cod-A and the encrypted private code Cod-B) and associate it (i.e. write it, store it, imprint it or fix it) to the transponder 7 through the writing apparatus (Block 400a). Said operations of creating the validation code and storing it are carried out by means of techniques known per se, described for example in patent EP2743213B1.

The generation method 400 also includes a storage step in the blockchain (Block 400b), which comprises, in consecutive order between them, the steps of: verifying the condition of presence of the validation code (created and stored by block 400a) in the blockchain (Block 300); signalling a condition of presence of the validation code in the blockchain when the validation code is present in the blockchain (Block 410) or, alternatively, inserting the validation code in the blockchain when the validation code is not present in the blockchain (Block 420); and, following to the insertion of the validation code in the blockchain, attributing the ownership of the validation code to the owner (Block 430).

In particular, the step of signalling the condition of presence of the validation code (Block 410) is implemented through the writing apparatus and is adapted to warn the writing operator that the validation code to be inserted is already present in the blockchain (in particular, in one of the blocks already included in the blockchain). In other words, the validation code (and consequently the public code Cod-A and the encrypted private code Cod-B) that the writing operator intends to insert in the blockchain has already been generated and stored previously, and must therefore be discarded because it is no longer new and unique. Optionally, the condition of presence of the validation code in the blockchain is signalled through a generation warning message (also referred to as "generation warning"), communicated to the writing operator through the user-interface means 6 of the writing apparatus.

The step of inserting the validation code in the blockchain (Block 420) is implemented through the writing apparatus and is adapted to create a new block in the blockchain to store said validation code, and a respective creation contract of the validation code, according to known techniques. Furthermore, the new block of the blockchain stores through the writing apparatus further information, acquired through the user-interface means 6, on the validation code (such as the generation date, details relating to the producer, etc.). Optionally, the insertion of the validation code in the blockchain is signalled through a generation notification message (included in block 420 but not shown in Figure 3), communicated to the writing operator through the user-interface means 6 of the writing apparatus.

Following to the insertion of the validation code in the blockchain, the step of attributing the ownership of the validation code to the owner (Block 430) takes place through the writing apparatus, and is adapted to attribute the ownership (holding) of the validation code to the producer who produces it (and who therefore becomes the owner and the holder; according to one embodiment, the producer is the writing operator). The step of attributing the ownership includes generating an ownership contract of the validation code including information concerning the ownership of the validation code (and optionally further details, e.g. the owner's personal or business data, and any passwords known to the owner only). The ownership contract of the validation code is therefore associated with a respective block which is added to the blockchain which includes the creation contract of said validation code, according to per se known techniques. According to an embodiment of the present invention, the step of attributing the ownership also includes attributing a real right to the transferee generating a real right contract of the validation code (i.e. adding to the blockchain an additional block corresponding to the real right contract of the validation code), which includes information concerning the real right of the validation code (and optionally further details, for example personal or business data of a holder of the real right of the validation code, and any passwords known to that holder).

Optionally, the attribution of the ownership of the validation code in the blockchain is signalled through an attribution notification message (included in block 430 but not shown in Figure 3), communicated to the writing operator through the user-interface means 6 of the writing apparatus.

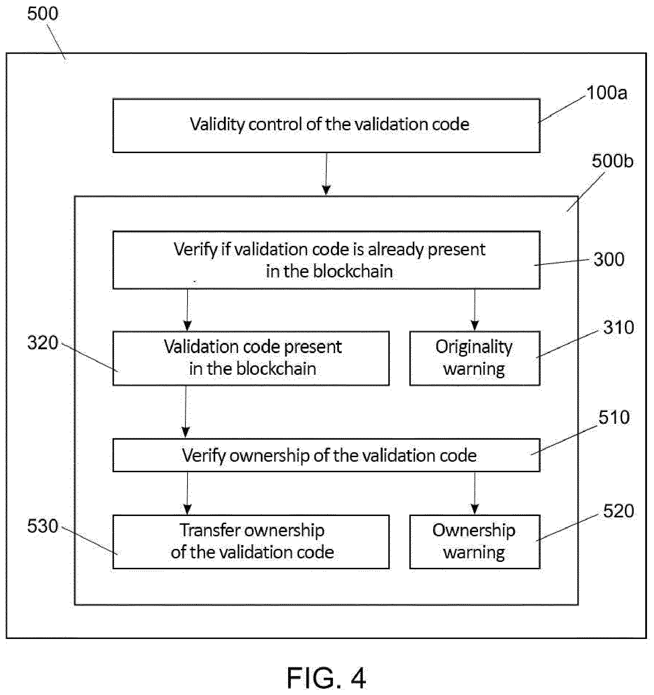

On the other hand, Figure 4 describes an ownership transfer method 500 of the validation code, adapted to transfer the ownership of the validation code through the apparatus for validating the container 3 (in particular, through the electronic elaboration unit 5), i.e. to remove the ownership of the validation code from the transferor and to attribute it to the transferee.

The ownership transfer method 500 includes conducting the validity control 100a as previously described with reference to Figure 2, and further conducting an ownership transfer step 500b. The ownership transfer step 500b comprises, in consecutive order between them, the step of: verifying the condition of presence of the validation code (obtained through the validity control 100a) in the blockchain (Block 300); signalling the condition of absence of the validation code in the blockchain when the validation code is not present in the blockchain (Block 310) or, alternatively, signalling the condition of presence of the validation code in the blockchain when the validation code is present in the blockchain (Block 320); and, following to the signalling of the condition of presence of the validation code in the blockchain (Block 320), verifying a condition of ownership of the validation code (Block 510).

With reference to block 510, the validation system 1 verifies, through the apparatus for validating the containers 3, the condition of ownership of the validation code in the blockchain when the validation code is present in the blockchain (Block 320). In particular, the apparatus for validating the containers 3 acquires from the blockchain the information concerning the current ownership of the validation code (such as name, personal or business data of the owner of the validation code and any passwords). In detail, said information is acquired from the ownership contract of the validation code stored in the respective block of the blockchain. The apparatus for validating the containers 3 also acquires and stores first incoming data (such as name, personal or business data of an alleged transferor of the validation code, and any passwords), provided by the alleged transferor and inserted by the operator through the user-interface means 6, and compares said first incoming data with the information concerning the ownership of the validation code: the apparatus for validating the containers 3 transfers the ownership of the validation code (Block 530) through technique known per se (execution of a specific contract on the blockchain) when the first incoming data inserted by the operator are concordant (for example, coincide) with the information concerning the ownership of the validation code or, alternatively, it signals to the operator a condition of irregularity (Block 520) when the first incoming data inserted by the operator are discordant (for example, they are different) from the information concerning the ownership of the validation code. In other words, if the alleged transferor has the right (i.e. it is the transferor owner and has the first incoming data that are concordant with the information concerning the ownership of the validation code stored in the blockchain), the ownership of the validation code is transferred from the transferor to the transferee. In detail, the step of transferring the ownership of the validation code is performed by generating an ownership transfer contract of the validation code, i.e. by adding to the blockchain a respective block including said transfer contract. In particular, in the case of block 530 the apparatus for validating the containers 3 acquires, through the user-interface means 6, second incoming data (such as name, personal or business data of the transferee owner, transfer date and any passwords) and stores (through the electronic elaboration unit 5) said second incoming data in the ownership transfer contract of the validation code, thus storing the transferee as the current holder of the ownership of the validation code. Optionally, the ownership transfer of the validation code in the blockchain is signalled through a transfer notification message (included in block 530 but not shown in Figure 4), communicated to the operator through the user-interface means 6.

Alternatively, if the alleged transferor is not authorized (i.e. does not have the correct first incoming data, and therefore is not the transferor owner), no ownership transfer contract of the validation code is generated, and the ownership of the validation code remains therefore unaltered. With reference to block 520, when the first incoming data inserted by the operator are discordant from the information concerning the ownership of the validation code, the validation system 1 signals through the apparatus for validating the containers 3 said condition of irregularity through an irregularity warning message (also referred to as "ownership warning"), communicated to the operator through the user-interface means 6 (Block 520).

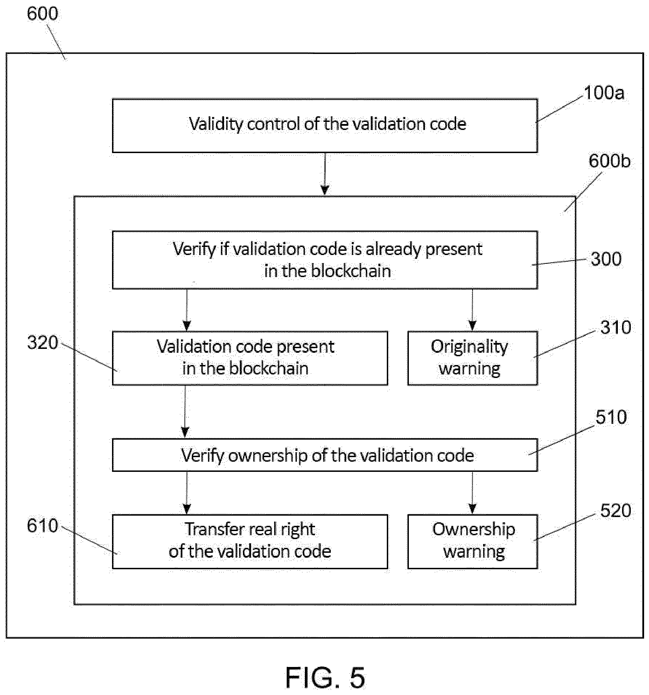

Figure 5 describes a real right transfer method 600 for transferring the real right of the validation code through the apparatus for validating the container 3 (in particular, through the electronic elaboration unit 5). Real right means a typical subjective right over an object (physical or intangible), which gives the holder of the real right an absolute and immediate power over the object (here on the validation code). The real right does not comprise the ownership of the validation code, but includes for example the usufruct of the validation code, transferred by the transferor and attributed to the transferee.

The real right transfer method 600 includes carrying out the validity control 100a as previously described with reference to Figure 2, and further carrying out a real right transfer step 600b. The real right transfer step 600b comprises, in consecutive order between them, the step of: verifying the condition of presence of the validation code (obtained through the validity control 100a) in the blockchain (Block 300); signalling the condition of absence of the validation code in the blockchain when the validation code is not present in the blockchain (Block 310) or, alternatively, signalling the condition of presence of the validation code in the blockchain when the validation code is present in the blockchain (Block 320); following to the signalling of the condition of presence of the validation code in the blockchain (Block 320), verifying the condition of ownership of the validation code (Block 510); and signalling to the operator a condition of irregularity (Block 520) if the first incoming data inserted by the operator are discordant from the information concerning the ownership of the validation code, or, alternatively, transferring the real right of the validation code if the first incoming data inserted by the operator are concordant with the information concerning the ownership of the validation code (Block 610).

With reference to block 610, the validation system 1 transfers, through the apparatus for validating the containers 3 (in particular, through the electronic elaboration unit 5), the real right of the validation code from the transferor to the transferee when the first incoming data inserted by the operator are concordant with the information concerning the ownership of the validation code present in the blockchain. In other words, if the alleged transferor has the right (i.e. it is the transferor owner and has the first incoming data that are concordant with the information concerning the ownership of the validation code stored in the blockchain), the real right of the code validation is transferred. In particular, in block 610 the apparatus for validating the containers 3 acquires, through the user-interface means 6, third incoming data (such as name, personal or business data of the transferee of the real right, transfer date of the real right and any passwords) and stores (through the electronic elaboration unit 5) said third incoming data in the blockchain through known techniques. In particular, the step of transferring the real right of the validation code is carried out by executing on the blockchain (through the electronic elaboration unit 5) a respective real right transfer contract of the validation code which includes the third incoming data, i.e. adding to the blockchain a respective block including said real right transfer contract. Optionally, the real right transfer of the validation code in the blockchain is signalled through a real right notification message (included in block 610 but not shown in Figure 5), communicated to the operator through the user-interface means 6.

Furthermore, according to an embodiment of the present invention, the apparatus for validating the containers 3 also comprises a communication module 12 (not shown), and is configured to operate in a first operating mode. In the first operating mode both the steps using the blockchain (also called first steps, and including the validity control 100a and the step of creating the validation code and storing it 400a) and those that do not exploit the blockchain (also called second steps, and including the originality control 100b, the storage step in the blockchain 400b, the ownership transfer step 500b and the real right transfer step 600b) are conducted in an "online" way.

According to a different embodiment, the apparatus for validating the containers 3 comprises the communication module 12 and is configured to operate in a second operating mode, in which the first steps are conducted in an "offline" way while the second steps are conducted in an "online" way.

Furthermore, according to a further embodiment, the apparatus for validating the containers 3 is configured to operate in a third operating mode, in which both the first and second steps are carried out in an "offline" way.

Advantageously, the communication module 12 is configured to establish a wireless communication between the apparatus for validating the containers 3 and an external server (not shown because it is not part of the present invention), which hosts (stores) the blockchain. In the first and second operating modes, the communication module 12 operates in a manner known per se, through known communication protocols of the wireless type (for example, IEEE 802.11 for wireless local area networks, WLAN), and allows the apparatus for validating the containers 3 to establish a connection with the external server to access the blockchain, and to carry out the steps listed above. In this way, the costs of the apparatus for validating the containers 3 are lower than in the case described with reference to the third operating mode, since the presence of memories integrated in the apparatus for validating the containers 3 is not required.

The third operating mode is instead configured to conduct both the first and second steps in an "offline" way. In this case, the blockchain is stored in the apparatus for validating the containers 3 (for example, in a memory integrated in the apparatus for validating the containers 3, not shown in Figure 2). This allows the apparatus to be used to validate the containers 3 even in regions where the wireless connection is not guaranteed, since it does not require any communication with the external server. Furthermore, the third operating mode makes it possible to operate even in the event of a temporary failure of the infrastructures adapted to provide local wireless connection coverage. In spite of this, the establishment of the wireless connection by the apparatus for validating the containers 3 is provided for whenever possible (i.e. when the apparatus for validating the containers 3 is in areas with wireless connection coverage). This allows the apparatus for validating the containers 3 to have access to, and store, updated versions of the blockchain, in a way which is per se obvious to the person skilled in the art.

From an examination of the characteristics of the method to validate codes, of the method to assign codes, and of the relative system to validate codes implemented according to the present invention, the advantages it allows obtaining are evident.

The validation system 1 allows, by means of the verification method 100, to first control the validity and then the authenticity of the validation code.

The originality control 100b guarantees that codes Cod-A and Cod-B, compliant with the standard of the validation system 1 but counterfeit, are identified and are not accepted by the validation system 1. This is made possible by using the blockchain, and makes the verification method 100 robust against undue publication of the encryption algorithm or information theft. In fact, only the authorized producer is enabled to add blocks in the blockchain, making it easy to identify counterfeit validation codes (i.e. absent from the blockchain).

Furthermore, the validity control 100a reduces the computational and time cost necessary to identify the block of the blockchain to which the validation code to be examined corresponds. In particular, only the validation codes of the RFID type compatible with the standard of the validation system 1 need to be controlled by means of the originality control 100b, while the remaining RFID codes (the RFID codes not compatible with the standard of the validation system 1) are preliminarily discarded through the validity control 100a.

The blockchain of the present invention has the advantages associated with the known block chains, and in particular it guarantees:
- an implementation of the turing-complete machine type, of a per se known type;
- constant presence and maintenance of blocks (objects) in the blockchain, through the contracts that generate them;
- immutability of the transactions stored in the blocks of the blockchain, i.e. the impossibility of deleting or modifying the information stored in the blocks of the blockchain;
- presence of reward mechanisms of a per se known type (such as cryptocurrency) for the maintenance work of the blockchain transactions (for example, "proof of work", POW) ;
- execution of further contracts (further transactions) adapted to bring the objects into respective new statuses, so that the transactions cannot be rejected; and
- possibility of public access to the blockchain to verify the status of each object (contract) and of the attributes that are part thereof.

Furthermore, the validation system 1 described above has the advantage of promptly signalling to the operator conditions of irregularity associated with a container 2 without requiring the storage of a large amount of data in the apparatus for validating the container 3. In other words, thanks to the verification method 100 described above, in the normal step of use of the containers, the apparatus for validating the containers 3 does not need to have in its memory container codes intended for collection, but only requires the logic for excluding from reading those codes, close to but not relevant to the collection itself, or to be able to identify counterfeit or false codes.

Each validation code stored in the blockchain is an absolute unique code (hence single), configured to univocally associate the validation code to an owner, while respecting his privacy.

It is also possible to generate validation codes and attribute the ownership (Figure 3), update features of the validation code (transfer the ownership thereof as described in Figure 4 and/or transfer the relative real rights thereof as described in Figure 5), thus allowing to improve and optimize the use of the validation code (and therefore of the recognition and use of RFID codes).

Furthermore, the system described above has the advantage of increasing the validation security of the waste containers during their collection.

Finally, it is clear that modifications and variations can be made to the method to validate codes, the method to assign codes, and the relative system to validate codes described and illustrated herein without departing from the protective scope of the present invention, as defined in the attached claims.

The block of verification of the status of the validation code (Block 330) may be absent from the verification method 100 of Figure 2. In this case, block 320 is immediately followed by block 340.

According to a possible variant of the present invention, not illustrated, the system can differ from the validation system 1 described above in that it provides for replacing the transponders 7 with bar codes associated with (fixed by means of supports - labels - or printed on) containers 2 and each containing the public code Cod-A and the private code Cod-B. Preferably, the validation system 1 provides for the public code Cod-A and the private code Cod-B to be encoded in a two-dimensional bar code.

In addition, if the blockchain already comprises an ownership transfer contract (hereinafter called previous ownership transfer contract) of the validation code, said previous ownership transfer contract acts as an ownership contract for an additional ownership transfer contract (hereinafter called subsequent ownership transfer contract), immediately consecutive to the previous ownership transfer contract (i.e. in which there are no further ownership transfer contracts between the previous ownership transfer contract and the subsequent ownership transfer contract). In other words, the subsequent ownership transfer contract allows the ownership transfer of the validation code from the transferee of the previous ownership transfer contract (who is also the transferor of the subsequent transfer contract) to the transferee of the subsequent ownership transfer contract. Similarly and in a way that is per se obvious to the person skilled in the art, the real right is transferred from a previous real right transfer contract to an immediately consecutive real right transfer contract.

Furthermore, a further variant of the present invention provides that the validation system 1 is not limited to the scope of waste validation, but is used in any application concerning the validation of radiofrequency identification codes (for example, RFID codes on chip that use "Near-Field Communication", NFC technology).

## Claims

1. A method (100) to validate codes implemented through a validation apparatus (3) including an electronic elaboration unit (5), comprising the steps of:
- - receiving (200, 210) a public code (Cod-A) and an encrypted private code (Cod-B) associated to a code support (7);
- - encrypting, by the electronic elaboration unit (5), the private code (Cod-B) through the public code (Cod-A) and an encryption algorithm, thus generating a validation code;
- - comparing (220), by the electronic elaboration unit (5), the validation code with the public code (Cod-A) to verify if the validation code and the public code (Cod-A) satisfy between them a predetermined control relation;
- - when said predetermined control relation is satisfied, verifying (300), by the electronic elaboration unit (5), a condition of presence of the validation code in a blockchain; and
- - when the condition of presence of the validation code in the blockchain is satisfied, signalling (340) a validation of the validation code.

2. The method according to claim 1, further comprising, when the condition of presence of the validation code in the blockchain is satisfied, the steps of:
- signalling (320) a condition of presence of the validation code in the blockchain; and
- verifying (330), by the electronic elaboration unit (5), a status of the validation code by acquiring information recorded in the blockchain and concerning the validation code.

3. The method according to claim 2, wherein the step of verifying (330) the status of the validation code comprises the step of acquiring from the blockchain, by the electronic elaboration unit (5), a validation code generation date, a validation code ownership acquisition date, personal data of an owner of the validation code, acquisition date of validation code transfer of use, personal data of a transferee, personal data of a transferor.

4. The method according to claim 1, further comprising, when the condition of presence of the validation code in the blockchain is not satisfied, the step of signalling (310) a condition of absence of the validation code in the blockchain.

5. The method according to claim 1, further comprising, when said predetermined control relation is not satisfied, the step of signalling (240) a validation error condition of the validation code.

6. The method according to any one of the preceding claims, wherein the step of comparing (220) the validation code with the public code comprises verifying, by the electronic elaboration unit (5), if the private code (Cod-B) contains the public code (Cod-A) in a given position within the private code (Cod-B) itself.

7. The method according to any one of the preceding claims, further comprising the steps of:
a. generating (400a), by the electronic elaboration unit (5), the validation code and associating it to said code support (7);
b. verifying (300), by the electronic elaboration unit (5), a condition of presence of the validation code in a blockchain; and
c. when the condition of presence of the validation code in the blockchain is not satisfied, generating (420) in the blockchain a creation contract of the validation code and, following to the generation of the creation contract, generating (430) in the blockchain an ownership contract of the validation code, and wherein the steps a, b, c are carried out prior to the steps listed in claim 1.

8. The method according to claim 7, further comprising, when the condition of presence of the validation code in the blockchain is satisfied, the step of signalling (410) the condition of presence of the validation code in the blockchain.

9. A method (500; 600) to assign codes implemented through a validation apparatus (3) including an electronic elaboration unit (5), comprising the steps of:
- - receiving (200, 210) a public code (Cod-A) and an encrypted private code (Cod-B) associated with a code support (7);
- - encrypting, by the electronic elaboration unit (5), the private code (Cod-B) through the public code (Cod-A) and an encryption algorithm, thus generating a validation code;
- - comparing (220), by the electronic elaboration unit (5), the validation code with the public code (Cod-A) to verify if the validation code and the public code (Cod-A) satisfy between them a predetermined control relation;
- - when said predetermined control relation is satisfied, verifying (300), by the electronic elaboration unit (5), a condition of presence of the validation code in a blockchain;
- - when the condition of presence of the validation code in the blockchain is satisfied, verifying (510) by the electronic elaboration unit (5) a condition of ownership of the validation code; and
- when the condition of ownership of the validation code in the blockchain is satisfied, updating (530; 610), by the electronic elaboration unit (5), a feature of the validation code.

10. The method according to claim 9, further comprising, when said predetermined control relation is not satisfied, the step of signalling (240) a validation error condition of the validation code.

11. The method according to claim 9, further comprising, when the condition of presence of the validation code in the blockchain is not satisfied, the step of signalling (310) a condition of absence of the validation code in the blockchain.

12. The method according to any one of claims 9-11, wherein the step of comparing (220) the validation code with the public code comprises the step of verifying, by the electronic elaboration unit (5), if the private code (Cod-B) contains the public code (Cod-A) in a given position within the private code (Cod-B) itself.

13. The method according to claim 9, further comprising, when the condition of presence of the validation code in the blockchain is satisfied, the step of signalling (320) a condition of presence of the validation code in the blockchain.

14. The method according to claim 9 or claim 13, wherein the step of verifying (510) the condition of ownership of the validation code comprises the steps of:
- acquiring, by the electronic elaboration unit (5), from an ownership contract in the blockchain, information concerning the ownership of the validation code;
- acquiring, by interface means (6) operatively coupled to the validation apparatus (3), first incoming data concerning a transferor; and
- verifying, by the electronic elaboration unit (5), a condition of concordance of the first incoming data with said information concerning the ownership of the validation code.

15. The method according to claim 14, wherein the step of verifying the condition of concordance of the incoming data with said information concerning the ownership of the validation code comprises the step of verifying, by the electronic elaboration unit (5), a condition of coincidence of the incoming data with said information concerning the ownership of the validation code.

16. The method according to any one of claims 9, 12-15, further comprising, when the condition of ownership of the validation code in the blockchain is not satisfied, the step of signalling (520) a condition of irregularity concerning the ownership of the validation code.

17. The method according to claim 14 or claim 15, wherein the step of updating (530) the feature of the validation code when the condition of ownership of the validation code in the blockchain is satisfied comprises the steps of:
- acquiring, by the interface means (6), second incoming data indicative of the ownership of the validation code; and
- generating, by the electronic elaboration unit (5) in the blockchain, an ownership transfer contract of the validation code which includes the second incoming data.

18. The method according to claim 14 or claim 15, wherein the step of updating (610) the feature of the validation code when the condition of ownership of the validation code in the blockchain is satisfied comprises the steps of:
- acquiring, by the interface means (6), third incoming data indicative of a real right of the validation code; and
- generating, by the electronic elaboration unit (5) in the blockchain, a validation code real right transfer contract which includes the third incoming data.

19. A system to validate codes, comprising:
a code support (7) to which a public code (Cod-A) and an encrypted private code (Cod-B) are associated; and
a validation apparatus (3) including an electronic elaboration unit (5), configured to:
- receive the public code (Cod-A) and the encrypted private code (Cod-B);
- encrypt the private code (Cod-B) through the public code (Cod-A) and an encryption algorithm, thus generating a validation code;
- compare (220) the validation code with the public code (Cod-A) to verify if the validation code and the public code (Cod-A) satisfy between them a predetermined control relation;
- when said predetermined control relation is satisfied, verify (300) a condition of presence of the validation code in a blockchain; and
- when the condition of presence of the validation code in the blockchain is satisfied, signal (340) a validation of the validation code.

20. The system to validate codes according to claim 19, further comprising a communication module (12) configured to establish a wireless communication between the validation apparatus (3) and an external server.

21. The system to validate codes according to claim 19 or claim 20, further comprising a writing unit configured to associate the validation code to the code support (7).

22. The system to validate codes according to any one of claims 19-21, wherein the code support (7) is operatively coupled to a respective waste container (2).
